# FASCICULE DE BREVET EUROPEEN

(11) **EP 1 499 458 B1**
(45) Date de publication et mention de la délivrance du brevet: **21.11.2007**
(21) Numéro de dépôt: 03747469.9
(22) Date de dépôt: 29.04.2003
(51) Int. Cl.: B09B 3/00, A62D 3/00

(54) **TRAITEMENT POUR LA VALORISATION DES RESIDUES D'INCINERATION DE DECHETS ET ANALOGUES**
BEHANDLUNG ZUR VERWERTUNG VON ABFALLVERBRENNUNGSRÜCKSTÄNDEN UND DERGLEICHEN
TREATMENT FOR UPGRADING WASTE INCINERATION RESIDUES AND THE LIKE

(30) Priorité: 30.04.2002 FR 0205402
(43) Date de publication de la demande: 26.01.2005
(73) Titulaire: Sagace Services en Administration, Gestion et Applications au Conseil à l'Environnement, 75002 Paris (FR)
(72) Inventeur: HUBERT, Jean-Pierre, G, F-45460 Bouzy La Foret (FR); PERDICAKIS, Michel, F-54000 Nancy (FR); BESSIERE, Jacques, F-54610 Sivry (FR); CORTOT, Jêrome, F-54610 Sivry (FR)
(74) Mandataire: Ventavoli, Roger
(86) Numéro de dépôt international: PCT/FR2003/001334
(87) Numéro de publication internationale: WO 2003/092921

(56) Documents cités:
- WO-A-89/11912
- WO-A-94/08699
- DE-A- 3 626 885
- DE-A- 4 429 781
- FR-A- 2 754 747

## Description

L'invention concerne les traitements de déchets industriels, correspondant au préambule des revendications 1 et 9, décrit dans FR-A-2 754 747. Plus précisément, les traitements du type considéré sont ceux permettant, par voie hydrométallurgique, la séparation du matériau traité en deux fractions dont l'une, produite sous une forme non nuisible à l'environnement, est donc potentiellement valorisable par recyclage dans l'industrie. L'invention s'attache plus particulièrement à l'application de ce type de traitement à des déchets spéciaux, tels que les sous-produits d'incinération de combustibles divers, notamment aux résidus d'épuration des fumées d'incinération d'ordures ménagères, ci-après dénommés refiom.

On rappelle que le terme "refiom" désigne de façon générale les cendres volantes, les cendres sous-chaudières ou les "gâteaux" de filtration générés par l'incinération des ordures ménagères. Ils se présentent généralement sous forme fragmentée ou divisée, en poudre ou granulats. Bien que constitués en majeure partie de substances minérales dépourvues de nocivité, les refiom concentrent cependant les éléments polluants contenus dans les déchets incinérés, tels que des métaux lourds (Plomb, Chrome, Cadmium, Zinc...) ou des sulfates. Compte-tenu de leur teneur élevée en éléments polluants aisément entraînables à l'eau, les refiom doivent être stabilisés dans un premier temps avant de pouvoir être enfouis dans des centres de stockage de déchets ultimes en classe I. Ce type de déchets dits "ultimes" est alors peu réactif, peu évolutif et peu soluble, mais son potentiel polluant reste pour l'essentiel constitué par les métaux lourds qu'il peut encore contenir.

La pratique de l'élimination des ordures ménagères par incinération se développe de plus en plus de nos jours, et, avec elle, la prolifération des refiom. On connaît par exemple, du récent article paru dans la revue française "Recyclage Récupération Magazine", édition du 29 mars 2002 (p.13), un procédé de traitement d'inertage des refiom par vitrification à haute température à l'aide de torches à plasma. Le coût actuel d'un tel procédé excède cependant assez largement celui de l'enfouissement des refiom en classe I, de sorte qu'une solution pyrogénique de ce genre ne semble pas encore économiquement viable, même si l'on tient compte d'une éventuelle valorisation des vitrifias en sous-couche routière, en tant que mâchefer à faible fraction lixiviable de catégorie V. La pratique même de vitrification thermique génère d'ailleurs des effluents gazeux en grande quantité, dont les résidus solides (de l'ordre de 1 tonne pour 600 tonnes de refiom) doivent être eux aussi placés en décharge de classe I.

En fait, il n'existe toujours pas de nos jours, semble-t'il, de traitement d'inertage économique autorisant à coup sûr un recyclage de tout ou partie des refiom, et ainsi d'en diminuer le volume stocké, dont le coût va d'ailleurs croissant à raison d'une réglementation de plus en plus sévère en faveur de la protection de l'environnement.

Le but de l'invention est précisément de proposer un traitement des refiom, ou autres déchets spéciaux analogues, permettant d'extraire une fraction inertée, donc non polluante et apte à être valorisé, en technique routière par exemple en tant que mâchefer à faible fraction lixiviable de catégorie V, dans des conditions économiques compatibles avec les exigences du marché, et ainsi réduire en conséquence le volume de déchets nuisibles à stocker.

A cet effet l'invention a pour objet un procédé hydrométallurgique de traitement en milieu aqueux des déchets industriels spéciaux contenant des métaux lourds et des sels, tels que les sous-produits d'incinération de combustibles divers, notamment les refiom, comprenant une opération de lavage au terme de laquelle on recueille la fraction solide lorsqu'elle répond aux exigences voulues de non-nocivité pour l'environnement l'autorisant à être valorisable industriellement, caractérisé en ce que, préalablement à cette opération de lavage, les déchets étant approvisionnés sous forme divisée, on les mouille jusqu'à réaliser une pulpe aqueuse épaisse qu'on laisse mûrir à chaud vers la formation d'une pâte par transformation rhéologique naturelle de la pulpe, la pâte ainsi obtenue est alors soumise à l'opération de lavage.

Conformément à une mise en oeuvre préférée de l'invention, l'opération de mouillage est menée par mélange avec un liquide ajouté, de préférence de l'eau, dans un rapport liquide/solide n'excédant pas 10/1 en poids.

Selon une autre mise en oeuvre préférée, le mûrissement de la pulpe est mené sous une température de 30 °C au moins.

Dans une variante de réalisation, l'opération de lavage est menée en utilisant des rapports liquide /solide supérieur à 50/1 en poids, et de préférence n'excédant pas 500/1 en poids au total. Avantageusement, l'opération de lavage s'effectue à l'eau.

Selon une autre variante, l'opération de lavage s'effectue en plusieurs séquences répétitives de lavage.

L'invention a aussi pour objet une installation pour la mise en oeuvre du procédé selon la revendication 1 comprenant une unité de lavage (2), caractérisée en ce que ladite unité de lavage est précédée par une unité de mouillage (1) pourvue de moyens de mélange (5) et de moyens de chauffage (6).

Selon une variante de réalisation, l'unité de lavage (2) comprend au moins un bac de lavage (9) pourvu en sortie d'une vanne de recirculation (11) précédée d'un suiveur de salinité (10).

De préférence, elle comprend également, monté sur la sortie de la fraction liquide dudit séparateur liquide/solide (12), un désalinisateur (13) formant boucle de recirculation.

Comme on l'aura sans doute déjà compris, l'invention réside, pour l'essentiel, à extraire des refiom une fraction solide inertée au terme d'un traitement de type hydrométallurgique mené en deux étapes successives sans ajout nécessaire de réactifs chimiques : une étape initiale de mouillage des matières, donc par ajout d'eau en faible excès par rapport aux besoins de la simple hydratation des matières, et produisant, au terme d'une période de mûrissement plus ou moins longue, menée à chaud, une pâte semi-solide dans laquelle sont fixés sous forme stable les éléments nocifs, en grande partie au moins, pâte que l'on traite ensuite dans une étape de lavage assurant un transfert vers la solution de lavage des éléments nocifs lixiviables encore présents au sein du solide.

Concernant le mouillage initial, l'ajout d'eau de mélange doit être modéré : suffisant afin que les déchets n'absorbent pas en totalité par hydratation l'eau ajoutée, mais sans aller bien au-delà. On visera simplement à former une pulpe aqueuse épaisse apte à être homogénéisée par agitation mécanique. A la lumière des essais menés jusqu'ici, un ratio pondéral liquide/solide de 2/1 en poids convient parfaitement à cet effet. En revanche, au-delà d'une valeur limite, qui a pu être chiffrée à 10/1 environ à l'échelle du laboratoire, le traitement en effet ne produit pas à coup sûr les résultats attendus.

Si ces conditions opératoires sont respectées, on observe au bout d'un temps de mûrissement "à chaud", variable selon les refiom, mais de l'ordre de quelques dizaines d'heures seulement, une modification du comportement rhéologique de la pulpe qui se transforme naturellement en une sorte de pâte de consistance bien plus ferme que la pulpe. Sa couleur change également. Il se trouve que, pour des raisons non encore élucidées qui pourraient être liées à des modifications du potentiel hydrogène du milieu, ce conditionnement de mûrissage thermique en phase aqueuse dense permet en quelque sorte de "fixer" les éléments nocifs, les métaux lourds en particulier, sous une forme inerte au sein même de la fraction solide. Celle-ci, initialement conditionnée en pulpe, acquiert alors la consistance meuble d'une pâte dense semi-solide, précurseur d'un sous-produit solide à faible fraction lixiviable pouvant être valorisé industriellement en techniques routières comme mâchefer de catégorie V, comme nous le verrons plus loin.

Par mûrissement "à chaud", il faut entendre une température de travail non nécessairement élevée et même avantageusement modérée, de préférence autour de 60-90°C, en tout cas voisine de 30°C au minimum. En dessous de cette température minimale, la pâte formée continue, en effet, à larguer par lixiviation, même après lavage forcé intense, des métaux lourds, le chrome en particulier, en quantité telle qu'il faut admettre que la fixation recherchée de ces espèces dans les solides par la formation de la pâte n'est plus assurée, sauf peut-être pour de très longues durées de mûrissage, de plusieurs mois sans doute, mais ceci reste à confirmer. On observe en effet, en tous cas sur l'échelle de la semaine, que la température de travail, à partir de ce seuil minimal de 30°C, a un effet favorable quant à la limitation de la libération ultérieure des métaux lourds au cours de l'étape de lavage et ce quel que soit le temps de mûrissement au-delà d'une durée "plancher" de l'ordre de 20 à 30 h. Si l'on opère au-dessus du point d'ébullition standard de l'eau, au-dessus de 100°C donc, par exemple autour de 120-150°C, on le fera sous enceinte pressurisée, mais sans perte d'eau par évaporation, donc en autoclave.

L'étape suivante de lavage à l'eau claire est une étape en phase diluée destinée à produire ledit sous-produit valorisable en mettant en solution les inévitables éléments nocifs résiduels présents au sein de la pâte, mais non "fixés" par le mûrissement préalable, donc lixiviables par nature. Elle peut être avantageusement mise en oeuvre au moyen de plusieurs lavages successifs (trois par exemple), soit par recirculation des solides dans un bac unique travaillant en boucle sur lui-même, soit à l'aide d'une batterie de bacs montés en cascade.

Bien entendu, une solution de lessivage classique pourra également convenir en lieu et place de l'eau. Le choix en faveur d'eau claire est uniquement dicté ici par des raisons économiques. On aura également avantage à pratiquer un suivi de la salinité (mise en place d'un conductimètre) sur les eaux de lavage afin de contrôler régulièrement l'état d'avancement de la mise en solution des espèces devant se déplacer dans la phase liquide et déterminer en conséquence plus aisément l'arrêt du lavage. On notera par ailleurs que les eaux usées de la dernière séquence de lavage peuvent afficher une valeur de pH voisine de 9 ou 10, soit un abattement de 4 points environ, la solution étant en effet très basique au début en raison de la forte teneur habituelle en chaux des refiom.

Au terme de cette étape de lixiviation forcée, on procède à une séparation solide/liquide finale permettant d'extraire la faction solide lavée inerte. Celle-ci peut être valorisée en tant que mâchefer de catégorie V. On rappelle que, selon la réglementation en vigueur, en particulier le respect de la norme française NF 31-210, seuls sont valorisables industriellement les mâchefers à faible fraction lixiviable. Ces derniers doivent répondre à certaines conditions sur la base d'un test de potentiel polluant consistant en trois lixiviations successives avec un rapport solide/liquide de 1/10 sur des échantillons représentatifs de 100 g chaque. Parmi ces conditions, on notera que la perte en masse ne doit pas être supérieure à 5 %. De plus, le mâchefer ne doit pas libérer plus 1,5 mg/kg de chrome, pas plus de 10 mg/kg de plomb et pas plus de 10 g/kg de sulfates. On trouvera au besoin une définition claire de ces mâchefers valorisables à faible fraction lixiviable, dits de catégorie V, dans la circulaire ministérielle française du 09 Mai 1994 sous la référence DPPR/SEI/BPSIED n° 94-IV-1.

Un avantage déterminant de l'invention est qu'elle permet de traiter les refiom à l'eau claire, donc à l'eau douce naturelle ou telle que délivrée par les circuits habituels d'adduction d'eau dans les communautés urbaines (dite "eau du robinet") quel que soit leur composition chimique initiale. Il est en outre envisageable de la mettre en oeuvre directement au niveau de l'usine d'incinération des ordures ménagères afin, notamment, de bénéficier de l'apport calorifique généré par la combustion des déchets. Par ailleurs, la mise en oeuvre du procédé ne requiert aucun ajout de réactifs chimiques particuliers.

La fraction liquide, à savoir les eaux de lavage, devra, elle, être recueillie et non pas déversée en l'état dans le milieu naturel, car elle contient à l'état dissous des métaux lourds et les sels (chlorures et sulfates) transférés, nuisibles à l'environnement. Il convient donc de considérer cette solution usée de lavage en conséquence. Mais ces aspects, auxquels le présent Demandeur a déjà pu apporter des réponses par ailleurs (voir par exemple FR-A-01.09058 ou FR-A-02.00950), se situent en dehors du cadre précis de la présente invention.

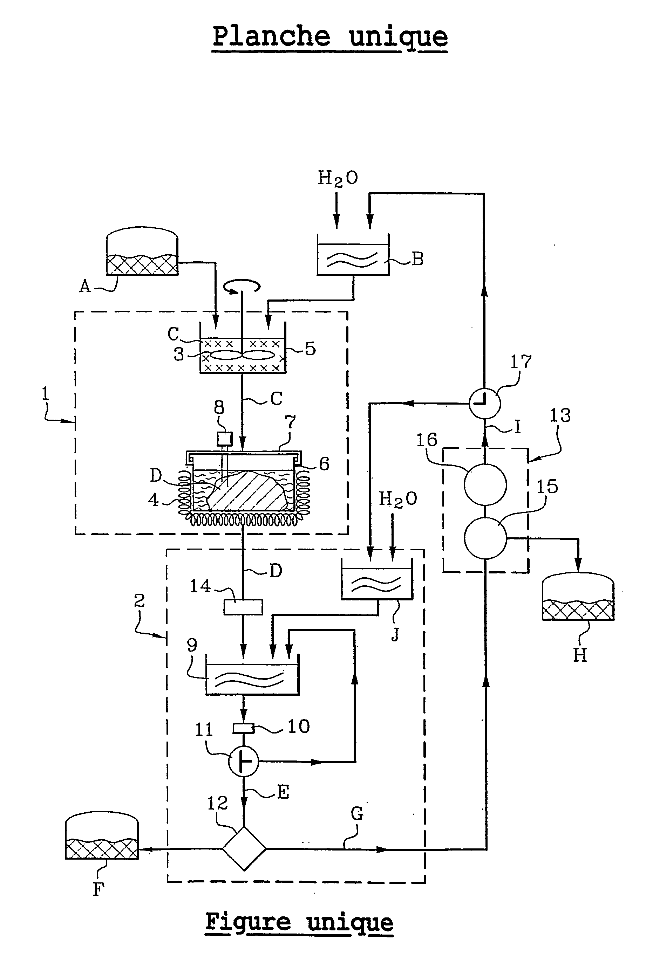

Celle-ci sera bien comprise et d'autres aspects et avantages ressortiront mieux au vu de la description qui suit d'un exemple de réalisation en référence à la figure unique annexée montrant un schéma fonctionnel du traitement.

Cette installation se compose, l'une à la suite de l'autre dans le sens de circulation des matières à traiter, d'une unité de mouillage chauffante 1 suivie par une unité de lavage 2.

L'unité de mouillage chauffante 1 comprend un bac mélangeur 5 doté d'un moyen de brassage 3 suivi par une cuve autoclave de mûrissement 6 à paroi métallique chauffante par résistance électrique 4 et fermée par un couvercle hermétique 7. Une cellule de conductance 8 est également prévue pour mesurer en permanence la conductance électrique de la matière dans la cuve 6 et la comparer avec une valeur de consigne prédéterminée représentative de la consistance de la pulpe C lorsqu'elle s'est transformée en pâte au terme de la phase de mûrissement.

L'unité de lavage 2 se compose d'un bac de lavage 9 (ou le plus souvent d'une batterie de bacs successifs dont on considèrera que seul le dernier est représenté sur la figure). A la sortie du bac de lavage est monté, dans cet ordre, un conductimètre 10 pour le suivi de la salinité des eaux de lavage (concentration en chlorures ou en alcalins - ions sodium ou potassium) suivi par une vanne deux voies 11 et un séparateur centrifuge solide/liquide 12 qui permet de récupérer la fraction solide au terme du traitement. La vanne 11 travaille en tout ou rien en réponse à la valeur de la conductance mesurée par le capteur 10 pour permettre le recyclage du flux de pulpe dans le bac 5 (ou dans un bac de lavage plus amont si on utilise une batterie de bacs en cascade) pour poursuivre le lavage si le niveau de salinité est encore trop élevé, ou l'envoi du flux au séparateur liquide/solide 12 dans le cas contraire. On notera la présence avantageuse d'une boucle de recirculation de l'eau constituée par un évaporateur-condenseur 13 monté sur la sortie de la fraction liquide du séparateur 12, et dont le rôle est, comme on le comprend, de récupérer en circuit fermé de l'eau claire pour sa réutilisation en lavage.

Les refiom à traiter A sont introduits à l'état divisé, de préférence préalablement broyés en grains fins, dans la cuve de mouillage 5, dans laquelle à l'aide d'un agitateur mécanique 3, ils sont mélangés avec une solution aqueuse B, qui peut avantageusement être simplement de l'eau claire. On vise à ce stade à ce que la matière solide soit simplement imbibée d'eau et forme une suspension dense et homogène dans la phase liquide. Comme déjà dit, la quantité relative d'eau de mouillage à introduire doit ainsi être suffisante pour, non seulement compenser l'eau d'hydratation qui sera inévitablement consommée par les refiom, mais produire un mélange juste assez fluide pour pouvoir être aisément brassé par l'agitateur mécanique 3. Ainsi, l'eau de mouillage B est ajoutée en cuve 5 selon un rapport pondéral liquide/solide d'au moins 1/1, de préférence entre 2/1 et 5/1, mais sans devoir aller au-delà de 10/1 environ quelle que soit la nature des refiom A à traiter.

Après mélange, la pulpe dense C ainsi produite est transférée en cuve 6 pour une période de mûrissement à chaud, sous 110°C, pendant 24 heures. Bien entendu, la cuve de mouillage 5 pourrait parfaitement faire office de cuve de mûrissement 6, si elle était dotée des équipements en conséquence.

Au terme de ce mûrissement, menée sans perte d'eau (l'enceinte 6 reste close et étanche pendant toute cette durée), la pulpe C se transforme naturellement en une pâte consistante D. La modification rhéologique marquée de la matière, de même que la modification corrélative de couleur, qui accompagnent cette transformation permettent de reconnaître aisément la fin de la période de mûrissement. Un suivi de la conductance au sein de la pulpe à l'aide de la cellule de mesure en continu 8 permettra au besoin de faciliter la détermination de la fin de mûrissement. La courbe de la conductance présente en effet dans sa partie terminale la forme classique d'un "S" à zone centrale à point d'inflexion suivie d'un palier de stabilité. Aussi, le calcul d'écart entre deux mesures successives permettra de reconnaître l'achèvement de la transformation rhéologique de la pulpe C en pâte D, lorsque ces écarts seront durablement en deçà d'une valeur de consigne qu'on s'est préalablement donnée comme représentative de la stabilité dans le temps de la conductance de la pulpe.

Une fois formée, la pâte D est introduite dans l'unité de lavage 2. Celle-ci, constituée par une batterie de bacs de lavage montés en cascade, dotés chacun en sortie d'un séparateur liquide/solide par centrifugation et recevant par ailleurs une solution de lavage J, qui peut avantageusement être simplement de l'eau. Une batterie allant jusqu'à quatre bacs doit pouvoir satisfaire aux besoins de lavage les plus exigeants. Qu'elle soit effectuée en boucle dans un bac unique 9 tel que montré sur la figure, ou séquentiellement à l'aide de bacs en cascade, la lixiviation s'opère globalement sous un rapport liquide/solide total d'au moins 50/1 environ exprimé en poids. En revanche, il est inutile et même non recommandé d'aller au-delà de 500/1. Un ratio situé entre 100/1 et 300/1 semble traduire des conditions opératoires optimales pour les refiom habituels.

Une séparation solide/liquide finale 12 sur la suspension E obtenue au terme du lavage permet d'extraire la fraction solide inertée F en vue de sa valorisation en tant que fine de mâchefer de catégorie V, applicable en techniques routières notamment. Le lavage arrive à son terme, commandé, comme on l'a vu, par le couple conductimètre 10-vanne d'aiguillage 11, quand la valeur mesurée de la concentration en anions chlorure par exemple aura atteint à la baisse une valeur de consigne préétablie.

On peut avoir avantage à effectuer cette séparation solide/liquide finale 12 sur un filtre-laveur, tel qu'un filtre à bande, pour essorer au mieux la fraction solide à récupérer de son liquide interstitiel chargé en espèces solubles. La fraction liquide saline G est recueillie, elle, afin d'être traitée ultérieurement.

Toutefois, avant de procéder à un tel traitement complémentaire, on aura avantage, conformément à une variante préférée de mise en oeuvre de l'invention, à conditionner le lixiviat G en une saumure H, phase liquide plus dense, donc moins volumineuse à traiter. A cet effet, la fraction liquide G, qui contient une forte teneur en sels, est acheminée vers l'unité de désalinisation 13. Cette unité peut être constituée par un équipement de C.M.V. (Compression Mécanique de Vapeur) du commerce, comprenant à la suite un évaporateur sous vide 15 produisant un résidu liquide dense H et un condensateur 16 fournissant une eau purifiée I disponible à nouveau au travers d'une vanne de recirculation 17 permettant de la diriger soit vers l'unité de mouillage, soit vers l'unité de lavage 2. La saumure H peut alors, par exemple, être traité selon les techniques connues de stabilisation/consolidation des refiom aux liants hydrauliques en vue de son stockage en tant que déchet.

Un résultat similaire peut être obtenu au moyen d'une unité 13 formée de membranes de nano-filtration qui commencent à apparaître dans le commerce.

L'exemple chiffré ci-après présente les résultats aux tests de lixiviation conformes à la norme de relargage NF X 31-210 sur des refiom préalablement traités par le procédé de l'invention à l'échelle du laboratoire. Les résultats essentiels sont consignés dans le tableau donné ci-dessous.

Deux échantillons, de 200 g chacun, de refiom brut approvisionné à l'état de poudre ont été ainsi traités. L'échantillon 1 provient d'un refiom ayant subi un traitement au lait de chaux à la sortie du filtre à manche de l'usine d'incinération qui l'a produit, ce qui lui confère un caractère sensiblement plus basique encore que l'échantillon 2 issu d'un électrofiltre et qui n'a pas subi ce post-traitement au lait de chaux. Bien que de compositions chimiques différentes, les deux échantillons ont été soumis au même protocole opératoire, qui est décrit à présent.

Chaque échantillon est d'abord mélangé à de l'eau de mouillage (eau du robinet) dans un rapport liquide / solide (L/S) de 2/1 et la pulpe formée est portée à 90°C pendant 24 h, durée de mûrissement nécessaire à la transformation de la pulpe en pâte à cette température. Ensuite, dans la seconde étape du traitement, chaque échantillon pâteux est séparé en deux parties égales, (a) et (b), de manière à les soumettre chacune à une séquence différente de trois lavages successifs à l'eau claire du robinet, comme indiqué en colonnes 2 et 3 du tableau, chaque séquence durant 24 h. La séquence de type (a) se caractérise par trois lavages successifs équivalents menés chacun sous un ratio L/S identique égal à 100/1, soit en tout 300 kg d'eau pour 1 kg de refiom. La séquence de type (b) se caractérise par deux lavages initiaux équivalents menés chacun sous un ratio L/S de 10/1 et suivi par un lavage terminal sous un ratio L/S de 100/1, soit en tout 120 kg d'eau pour 1kg de refiom.

Après séchage, chaque résidu solide recueilli, représentatif des refiom stabilisés tels qu'issus du traitement selon l'invention, se voit appliquer une lixiviation forcée selon la procédure normalisée identifiée ci-avant avant d'être analysé. Les résultats des analyses sont consignés dans les colonnes 4 et suivantes du tableau ci-dessous.

Pour des raisons pratiques propres aux conditions opératoires du laboratoire, les tests ont été effectués sur des quantités unitaires de produit lixivié sec de 15 g. On rappelle que pour être classés en tant que mâchefer valorisable de catégorie V, les refiom lixiviés doivent produire un lixiviat dont la quantité en espèces dissoutes, ramenée à 1 kg de refiom, doit être inférieure à 1,5mg/kg pour le chrome hexavalent, à 10 mg/kg pour le plomb, à 10 000 mg/kg pour les anions sulfates, et la perte en masse des résidus solides doit être inférieure à 5 %.

| | | Séquence de lavage | Cr _{(VI)} < 1,5 mg/kg | Pb < 10 mg/kg | ions sulfates < 10 g/kg | Perte en masse < 5 % |
|---|---|---|---|---|---|---|
| Echant. 1 | (a) | 3 x L/S = 100 | 0,7 | 1,0 | 1,8 | 2 % |
| | (b) | 2 x L/S = 10 + 1 x L/S= 100 | 0,4 | 3,8 | 0,3 | 3 % |
| Echant. 2 | (a) | 3 x L/S = 100 | 2,7 | 5,4 | 0,8 | 3 % |
| | (b) | 2 x L/S = 10 + 1 x L/S= 100 | 0,7 | 5,6 | 8,6 | 4 % |

Ainsi qu'on peut le constater, les deux types 1 et 2 de REFIOM testés entrent tous deux nettement dans la catégorie des mâchefers valorisables quand la séquence de lavages de la seconde étape du procédé de l'invention est de type (b). Pour le type (a), le critère de la perte en masse maximale est toujours rempli, de même que celui de la teneur maximale en plomb du lixiviat, mais la teneur en chrome est excessive pour l'échantillon 2 et doit donc être encore abaissée avant validation pour une valorisation dans le cadre de l'invention.

Ces résultats montrent par ailleurs qu'une séquence de type (b), c'est-à-dire moins d'eau d'abord à raison d'un lavage sous un ratio L/S de 10/1, répété une fois, suivi d'un lavage terminal sous un ratio de 100/1, procure les résultats attendus, et même meilleurs que ceux de la séquence de type (a) pour ce qui concerne le chrome, et ce avec une consommation d'eau relative réduite de plus de moitié.

Comme déjà souligné, l'invention trouve une application privilégiée dans le domaine du traitement des refiom, pour lequel elle a été d'ailleurs initialement conçue. Elle reste cependant applicable de manière générale à tous les résidus de procédés thermiques contenant des sels et/ou métaux lourds qui les rendent non-stabilisés ou évolutifs en l'état, donc lixiviables naturellement, comme par exemple les cendres volantes et mâchefers des centrales thermiques au charbon, certaines scories ou laitiers de la métallurgie, ou les résidus d'incinération des déchets municipaux et industriels (mâchefers, cendres...) autres que les refiom.

Il va de soi que l'invention ne se limite pas à l'exemple de réalisation décrit ci-avant, mais s'étend à de multiples variantes ou équivalents dans la mesure où est respectée sa définition qu'en donnent les revendications jointes.

En particulier, le terme "eau" ou "eau claire" utilisé ici pour qualifier le liquide de mouillage, comme celui du lavage, doit s'entendre non seulement comme pouvant être de l'eau douce naturelle (rivières, lacs... ou "du robinet") mais également toute solution de lavage aqueuse destinée au lavage des matériaux dans la mesure bien entendu où elle n'est pas elle-même porteuse des espèces polluantes que l'on veut extraire des refiom.

De même, la grandeur physique de la pulpe à suivre pour aider l'opérateur à détecter la formation de la pâte marquant la fin de la phase de mûrissement n'est pas nécessairement la conductance. D'autres grandeurs évolueront avec le temps vers une stabilisation de leur valeur mesurée, comme par exemple la viscosité, et à cet égard un viscosimètre du commerce pourra tout à fait se substituer à la cellule de conductance 8 prévue au niveau de la cuve de mûrissage 6.

Par ailleurs, il doit être noté que si l'invention a été conçue pour le traitement des refiom, elle n'en demeure pas moins applicable à beaucoup d'autres déchets analogues porteurs de métaux lourds lixiviables en milieux naturels comme par exemple les résidus de centrales thermiques au charbon (cendres volantes, mâchefers...) ou ceux de la métallurgie (laitiers, fumées d'aciérie électriques, etc...).

## Revendications

1. Procédé hydrométallurgique de traitement en milieu aqueux des déchets industriels spéciaux contenant des métaux lourds et des sels, tels que les sous-produits d'incinération de combustibles divers, notamment les refiom, comprenant une opération de lavage au terme de laquelle on recueille la fraction solide lorsqu'elle répond aux exigences voulues de non-nocivité pour l'environnement l'autorisant à être valorisable industriellement, **caractérisé en ce que**, préalablement à cette opération de lavage, les déchets étant approvisionnés sous forme divisée, on les mouille jusqu'à réaliser une pulpe aqueuse épaisse qu'on laisse mûrir à chaud vers la formation d'une pâte par transformation rhéologique naturelle de la pulpe, la pâte ainsi obtenue est alors soumise à l'opération de lavage.

2. Procédé selon la revendication 1, **caractérisé en ce que** l'opération de mouillage est menée par mélange avec un liquide ajouté dans un rapport liquide/solide n'excédant pas 10/1 en poids.

3. Procédé selon la revendication 1, **caractérisé en ce que** le mûrissement de la pulpe est mené sous une température de 30 °C au moins.

4. Procédé selon la revendication 1, **caractérisé en ce que** l'opération de lavage est menée en utilisant des rapports liquide /solide supérieur à 50/1 en poids.

5. Procédé selon la revendication 1, 2 ou 3, **caractérisé en ce que** l'opération de mouillage s'effectue avec de l'eau.

6. Procédé selon la revendication 1, 4 ou 5, **caractérisé en ce que** l'opération de lavage s'effectue à l'eau.

7. Procédé selon la revendication 1 ou 6, **caractérisé en ce que** l'opération de lavage s'effectue en plusieurs séquences répétitives de lavage.

8. Procédé selon la revendication 1, 6 ou 7, **caractérisé en ce que** l'opération de lavage est effectuée sous un rapport liquide /solide n'excédant pas 500/1 en poids au total.

9. Installation pour la mise en oeuvre du procédé selon la revendication 1 comprenant une unité de lavage (2), **caractérisée en ce que** ladite unité de lavage est précédée par une unité de mouillage (1) pourvue de moyens de mélange (5) et de moyens de chauffage (6).

10. Installation selon la revendication 9, **caractérisée en ce que** l'unité de lavage (2) comprend au moins un bac de lavage (9) pourvu en sortie d'une vanne de recirculation (11) précédée d'un suiveur de salinité (10).

11. Installation selon la revendication 9, **caractérisée en ce qu'**elle comprend également, monté sur la sortie de la fraction liquide dudit séparateur liquide/solide (12), un désalinisateur (13) formant boucle de recirculation.

## Claims

1. Hydrometallurgical method for the treatment in an aqueous medium of special industrial waste containing heavy metals and salts, such as the by-products of incineration of assorted combustible substances, especially RPIFHW, comprising a washing operation at the conclusion of which the solid fraction is collected when it meets the desired requirements of harmlessness towards the environment enabling it to be exploited industrially, **characterized in that**, prior to this washing operation, the waste being supplied in divided form, it is wetted until it forms a thick aqueous pulp which is allowed to mature under heating until it forms a paste by a rheological transformation natural to the pulp, the paste thus obtained being then subjected to the washing operation.

2. Method according to Claim 1, **characterized in that** the wetting operation is performed by mixing with an added liquid in a liquid/solid ratio not exceeding 10/1 by weight.

3. Method according to Claim 1, **characterized in that** the maturation of the pulp is conducted at a temperature of at least 30°C.

4. Method according to Claim 1, **characterized in that** the washing operation is performed using a liquid/solid ratio greater than 50/1 by weight.

5. Method according to Claim 1, 2 or 3, **characterized in that** the wetting operation is performed with water.

6. Method according to Claim 1, 4 or 5, **characterized in that** the washing operation is performed with water.

7. Method according to Claim 1 or 6, **characterized in that** the washing operation is performed in several repetitive washing sequences.

8. Method according to Claim 1, 6 or 7, **characterized in that** the washing operation is performed with a liquid/solid ratio not exceeding 500/1 by weight in total.

9. Installation for carrying out the method according to Claim 1 comprising a washing unit (2), **characterized in that** this washing unit is preceded by a wetting unit (1) equipped with mixing means (5) and heating means (6).

10. Installation according to Claim 9, **characterized in that** the washing unit (2) comprises at least one washing vat (9) equipped with a recirculation valve (11) at its outlet, preceded by a salinity monitor (10).

11. Installation according to Claim 9 **characterized in that** it also comprises a desalinator (13) mounted on the liquid fraction outlet of said liquid/solid separator (12), and forming a recirculation loop.

## Patentansprüche

1. Hydrometallurgisches Verfahren, um in einer wasserhaltigen Umgebung die Industriesonderabfälle, die Schwermetalle und Salze enthalten, wie beispielsweise die Unterprodukte der Verbrennung unterschiedlicher Brennstoffe, insbesondere die Rückstände aus der Reinigung der Abluft aus Hausmüllverbrennungsanlagen zu behandeln, mit einem Waschvorgang, nach Beendigung dessen der Festanteil aufgefangen wird, wenn er den geforderten Anforderungen an die Umweltunschädlichkeit erfüllt, wodurch er zur industriellen Verwertung zugelassen wird, **dadurch gekennzeichnet, dass** vor diesem Waschvorgang die in geteilter Form beschafften Abfälle benetzt werden, bis ein wasserhaltiger Dickschlamm entsteht, der zur Bildung einer Paste durch natürliche rheologische Transformation des Schlamms eine Warmreifung erfährt und die dadurch erzielte Paste dann dem Waschvorgang unterzogen wird.

2. Verfahren nach Anspruch 1, **dadurch gekennzeichnet, dass** der Benetzungsvorgang unter Beimengung einer Flüssigkeit erfolgt, die in einem Flüssig-Fest-Gewichtsverhältnis, das 10:1 nicht übersteigt, hinzugefügt wird.

3. Verfahren nach Anspruch 1, **dadurch gekennzeichnet, dass** die Schlammreifung bei einer Temperatur von mindestens 30 °C erfolgt.

4. Verfahren nach Anspruch 1, **dadurch gekennzeichnet, dass** der Waschvorgang unter Verwendung von Flüssig-Fest-Gewichtsverhältnissen, die 50:1 übersteigen, erfolgt.

5. Verfahren nach Anspruch 1, 2 oder 3, **dadurch gekennzeichnet, dass** der Benetzungsvorgang mit Wasser durchgeführt wird.

6. Verfahren nach Anspruch 1, 4 oder 5, **dadurch gekennzeichnet, dass** der Waschvorgang mit Wasser durchgeführt wird.

7. Verfahren nach Anspruch 1 oder 6, **dadurch gekennzeichnet, dass** der Waschvorgang in mehreren wiederholten Waschgängen erfolgt.

8. Verfahren nach Anspruch 1, 6 oder 7, **dadurch gekennzeichnet, dass** der Waschvorgang bei einem Flüssig-Fest-Gewichtsverhältnis, das insgesamt 500:1 nicht übersteigt, erfolgt.

9. Anlage zur Umsetzung des Verfahrens nach Anspruch 1 mit einer Wascheinheit (2), **dadurch gekennzeichnet, dass** der Wascheinheit eine Benetzungseinheit (1) vorgeschaltet ist, die mit Mischmitteln (5) und Heizmitteln (6) versehen ist.

10. Anlage nach Anspruch 9, **dadurch gekennzeichnet, dass** die Wascheinheit (2) mindestens einen Waschkasten (9) umfasst, der am Ausgang mit einem Rezirkulationsventil (11) versehen ist, dem eine Salzgehaltsnachführeinrichtung (10) vorgeschaltet ist.

11. Anlage nach Anspruch 9, **dadurch gekennzeichnet, dass** sie ebenfalls einen am Austritt des Flüssiganteils aus dem Flüssig/Fest-Trenner (12) montierten Entsalzer (13) umfasst, der eine Rezirkulationsschleife bildet.
